# EUROPEAN PATENT APPLICATION

(11) **EP 0 913 099 A1**
(43) Date of publication of application: **06.05.1999**
(21) Application number: 97308683.8
(22) Date of filing: 30.10.1997
(51) Int. Cl.: A23P 1/08, A23L 1/217

(54) **Food coating**

(30) Priority: 29.10.1997 GB 9722794
(71) Applicant: DANISCO A/S, 1001 Copenhagen K. (DK)
(72) Inventor: Kools, Johannes Marinus Quirinus, 4731 TL Oudenbosch (NL)
(74) Representative: Maschio, Antonio

(57) **Abstract**

The invention provides a method for producing a reheatable food product, comprising the steps of:
a) preparing a coating for the food product;
b) adjusting the water binding capacity of the coating such that moisture developed during reheating of the food product is absorbed without compromising the crispness of the exterior of the product; and
c) applying the coating to the product.

## Description

The present invention relates to a food product which is reheatable by various means, including conventional and microwave ovens. In particular, the invention relates to a coated reheatable French fried potato slice product and a method for preparing such a product.

Fried or parfried food products destined for reheating are highly popular both in the catering industry and with home consumers. In the fast-food restaurant business parfried and frozen food items, especially potato strips or slices, are commonly purchased in bulk from commercial suppliers and stored frozen until shortly before serving. At that point, the parfried and frozen potato strips are prepared for eating by deep fat frying in fat or oil.

Outside of the restaurant business, however, deep fat frying is less popular due to its labour intensive nature. Instead, manufacturers have provided oven-ready products, wherein the product as purchased is placed in an oven in the frozen state and is heated to a temperature adequate for browning and warming. However, the oven-reheated product is in most cases not the equivalent of a product that has been completely deep fat fried. In part, this is so because the desirable dehydration of surface areas of the potatoes that took place during the initial frying in deep fat is counteracted during oven reheating by moisture migrating from the centre, without the compensating crisping effect of deep fat frying. Alternatively, the use of ovens may give rise to excessive drying of the product throughout, such that the reheated product is dry and tough.

More recently, microwave ovens have been applied to the reheating of fried frozen food products. In a microwave oven, high frequency microwave radiation is passed through the food product. The power absorption or specific absorption rate for a particular product depends upon a variety of physical and chemical factors, such as frequency, product temperature, the magnitude of the electric field in the product, density and dielectric constants. The high frequency energy excites polar molecules (such as water) contained within the food product and heat is generated as a result. A characteristic of microwave reheating is thus that the product is warmed uniformly throughout, leading to a greater generation of water vapour from the interior of the product. This increases the moisture migration effect referred to above.

A partial solution to such problems described in the prior art involves the use of starch-based coatings on the fried product. For example, US Patent 5, 059, 435 to Lamb-Weston, the contents of which are incorporated herein by reference, summarises the prior art as follows. U.S. Pat. No. 3,597,227 to Murray et al. discloses a process in which raw potato strips are coated in a hot aqueous solution of modified amylose, with the coated strips containing from about 0.002 to 0.02 percent by weight of amylose. Prior to coating the potatoes, the amylose solution is heated until all the amylose has been gelatinised. This process is supposed to produce a finished product which has superior strength and rigidity, yet is not objectionably tough. The finished product also purportedly has a reduced oil content.

Similarly, U.S. Pat. No. 3,751,268 to Van Patten et al. discloses the coating of blanched potato pieces with 0.1 to 1.5 percent by weight of an ungelatinised unmodified high amylose starch having an amylose content of at least 50 percent. The coated potato strips are deep fat fried. Among other things, deep frying gelatinises the starch in the coating. The finished product reportedly had less oil and improved texture.

Another approach is disclosed in U.S. Pat. No. 4,317,842 to El-Hag et al. In that patent, blanched potato strips are dipped in an aqueous ungelatinised starch slurry to coat the strips, which are next soaked in hot oil to gelatinise the starch in the coating. The strips are then parfried and frozen. The potato strips prepared according to this process are reheated for consumption by cooking in an oven, as opposed to deep fat frying.

U.S. Pat. No. 4,487,786 to Junge describes a method of preparing a starch enrobing slurry for coating the outer surface of a frozen food product, such as pizza, in which the frozen pizza product is dipped in an aqueous starch slurry, sprayed with a lipid solution, and thereafter refrozen. The product is prepared for consumption by deep fat frying.

Finally, US Patent 5 059 435 to Lamb-Weston, Inc., describes the use of a coating composed of an aqueous starch slurry comprising chemically modified ungelatinised potato starch, chemically modified ungelatinised corn starch and rice flour. The claimed coating is said to improve the crispness of the outer surface of the reheated product, whilst maintaining the tenderness of the interior.

None of the coatings of the prior art, however, is entirely successful. In particular, even those coatings which are best suited to microwave-reheatable products have an unsatisfactory performance. Microwave-ready French fries are typically packaged in reflective boxes which assist heating by microwave radiation when opened. Without such packaging, microwave reheating is entirely unsatisfactory; however, the packaging costs are disproportionate in comparison to the cost of the food product itself.

### Summary of the Invention

In accordance with a first aspect of the present invention, therefore, there is provided a method for producing a reheatable food product, comprising the steps of:
a) preparing a coating for the food product;
b) adjusting the water binding capacity of the coating such that moisture developed during reheating of the food product is absorbed without compromising the crispness of the exterior of the product; and
c) applying the coating to the product.

In a second aspect, the invention provides a coating composition suitable for application to a reheatable food product comprising:
a) gelatinised starch obtainable from at least two sources; and
b) fibre;
wherein the viscosity of the coating is such that the reheatable food product retains between 0.1 and 14% by weight of the coating after application.

In a third aspect, the invention provides a food product coated with a coating according to the invention.

### Detailed Description of the Invention

The present invention is based on the realisation that the water binding capacity of a coating used to coat reheatable food products is highly important in the generation of a food product having the desired characteristics of a crisp outer layer and a tender inside. Surprisingly, the coating of the present invention is useful not only in the preparation of food products reheatable in microwave or conventional ovens, but also in the preparation of parfried food products designed to be finish fried and reheated contemporaneously by deep fat frying.

In the coatings provided by the prior art, the water-binding capacity is incorrect for the food product being considered. This leads directly to the unsatisfactory results obtained, particularly in microwave ovens. However, none of the prior art cited above mentions the importance of adjusting the water binding capacity of the coating to an optimum level. Instead, in general, the prior art relies exclusively on drying the food product in order to prevent the generation of excessive moisture. When combined with dehydrating reheating means such as conventional ovens, this can lead to excessively dry reheated products.

The adjustment of the water binding capacity of a coating according to the invention is an essentially empirical process. In essence, if the water binding ability is too high, the surface of the product will dry out excessively and will possess a hard, chewy mouthfeel. If the water binding capacity is too low, the surface of the product becomes saturated with water and the product has a limp, wet appearance. Use of a correct water binding capacity, however, enables the product to achieve a crisp outer coating and, simultaneously, a tender inside.

This is particularly advantageous in the context of microwave ovens, which produce moisture from the interior of the food product upon reheating. Without a coating having the correct water binding capacity, this usually leads to excessive wetting of the outer layer of the product. However, it is also advantageous for parfried products which are heated by deep fat frying. Such products also produce internal moisture on heating, which is usually countered by the crisping effect of the hot fat or oil combining with the exterior of the product. Where a low-fat fried product is required, however, the use of a coating is important in reducing the amount of fat absorbed by the product. Therefore, the coating must possess appropriate water binding characteristics.

The present invention is applicable to any coating suitable for application to reheatable food products in which the water binding capacity may be adjusted. Methods for adjusting the binding capacity of a coating are known in the art; in essence, a high-viscosity starch based coating will have a high water binding capacity, and a low viscosity coating a low water binding capacity. Further means for adjusting the water binding capacity of a coating are described below. In a preferred embodiment, however, the coating according to the present invention is a coating having the following composition:
a) gelatinised starch obtainable from at least two sources; and
b) fibre;
wherein the viscosity of the coating is such that the reheatable food product retains between 0.1 and 14% by weight of the coating after application.

According to the present invention, a "reheatable food product" is a food product which is at least partly fried before being cooled and subsequently reheated. In one embodiment, the product is only parfried, in which case the reheating preferably involves finish frying in deep fat. In a preferred embodiment, however, the product is deep fat fried to a fully cooked state and subsequently reheated otherwise than by deep fat frying, preferably in a conventional oven, under a heat lamp or in a microwave oven.

Products suitable for coating according to the invention include any precooked reheatable product. These include pizzas, chicken pieces, fried food products such as potato products, and the like.

Preferably, the fried food product is a potato slice or strip, known as French fries or chips. Preferably, raw unpeeled white potatoes are obtained for processing by the method of the invention. Any variety of potatoes is suitable, including Bintje, Garnet Chili, Early Rose, Russet Rural, Peach Blow, Early Ohio, Triumph, Kennebec, Merrimack, Delus, Saco, Katahdin, Bounty, Cherokee, Chippewa, Early Gem, Haig, Irish Cobbler, La Rouge, Norgold Russet, Norland, Onaway, Pungo, Red La Sorda, Red McGlure, Red Pontiac, Russet Burbank, Russet Sebago, Sebago Superior, Viking or White Rose. Moreover, modified, for example transgenic, potatoes may be used in order to exploit their advantageous properties.

A large number of fried potato products are known in the art. These include French fries, which are available in a number of different sizes, croquettes, potato slices and segments, fried whole potatoes, potato cubes and shapes, crinkle-cut fries, steakhouse chips, potato cakes and products made from reconstituted or mashed potato.

The potatoes are washed, peeled, trimmed, sorted, and cut. Each of these steps are well known in the art and discussed in detailed in Potato Processing, published in 1975 by the A.V.I. Publishing Co., Inc., Westport, Connecticut, and edited by W. F. Talbert and O. Smith. The cut potato strips are processed by any conventional method known in the art. An excellent source of potato processing information may be found in Talbert and Smith, Potato Processing, *supra*, herein incorporated by reference, and U.S. Pat. No. 3,397,993 to Strong and U.S. Pat. No. 3,649,305 to Wilder. Four sample methods are disclosed as follows. In the first method, the cut potato strips are blanched in approximately 74°C to 93°C water for 6-20 minutes, cooled to less than 38°C and then blanched again with approximately 74°C to 93°C water for 3 to 4 minutes, and treated with a dextrose dip at approximately 71°C for 30 seconds. In the second method, the cut potato strips are pre-treated with water at approximately 71°C for 3 to 8 minutes, treated with sodium acid pyrophosphate and sulphur dioxide, dried with approximately 93°C to 121°C air for 12 minutes, and steam blanched at atmospheric pressure for 5 to 7 minutes. The third method, the cut potato strips are simply blanched for a longer period of time as known in the art. A fourth method is prepared by treating the potatoes with sulphur dioxide to inhibit browning of the potato slices, water blanching the treated potatoes are approximately 5 minutes with water at approximately 82°C. Thereafter, the sliced, treated, blanched potatoes are dried with air at a temperature of approximately 121°C for about 3 minutes. During this step, the potato strips' weight loss is approximately 25%.

Generally, the cut potato strips are water-blanched prior to frying. Advantages of blanching include more uniform colour of fried products, reduction of fat adsorption through gelatinisation of the surface starch, reduced frying time since the potato is partially cooked by blanching, and improved texture of the final product. Blanching has a leaching effect on the sugars and serves to even out variations of sugar concentration at or near the surfaces of the cut potato strips. This gives a lighter and more uniform colour on frying.

Moreover, the products are optionally dried in between the blanching and frying steps. Typically, potato products designed for microwave reheating will contain less than 40% solids, usually less than 35% solids.

Generally, the pre-treatment step of method two minimises the leaching of natural sugar from the cut potato strips. Sodium acid pyrophosphate treatment prevents "greying" and heightens colour development.

The coating according to the invention is applied either after the blanching process or after drying of the blanched product. Preferably, the coating is applied before frying of the product. However, where the product undergoes more than one frying step, such as parfrying followed by finish frying, the coating advantageously may be applied after the first frying step.

Application of the product may be performed by any suitable means. In general, the art provides dipping means and spraying means for coating the product.

The product is then fried. Parfrying may be carried out for approximately 45 seconds in oil at approximately 177°C, whilst fully-fried products are fried for longer. Preferably, the product is then frozen. A suitable processing system may be selected by persons skilled in the art depending on the nature of the product and the intended reheating methodology to be used.

As set out above, a preferred coating according to the invention comprises two types of starch, defined as being obtainable from two separate sources, and fibre. By "obtainable from two sources", it is intended to indicate that two starches which have differing chemical compositions are used in the coating of the invention. Preferably, the starches are obtainable from potato and pea. Thus, in a preferred aspect of the invention, potato starch and pea starch are employed. However, the person skilled in the art will recognise that the properties of potato and pea starch may be duplicated by substituting them with other starches, natural or artificial in origin, without changing the substance of the invention. For instance, potato starch may effectively be substituted with rice flour.

Further sources of starch may be incorporated as necessary without departing from the invention. Thus, rice flour may be added in addition to potato flour. Wheat flour may also be incorporated; it contains dextrins which advantageously improve the colour of the fried product.

The amount of starch used in the coating of the invention cannot be specified except through empirical determination, since the requirement for starch is affected by the other ingredients of the coating. The key requirement is that the viscosity of the coating be such that a weight percentage of between 0.1 and 14% of the coating is retained on the product after the coating process. Preferably, between 2 and 6% w/w of the coating is retained. Thus, it will be apparent that even the coating technique itself will influence the amount of starch used. In a preferred aspect of the invention, however, the amount of starch in the coating composition is between about 4 and about 40% w/w.

The starches used in the method of the present invention are starches which may be gelatinised prior to use by heating. Processes for gelatinisation by heating, which typically involve heating a starch slurry to temperatures of about 40 to 70°C whilst stirring, are known in the art. Additionally, or alternatively, the starch may be modified starch, particularly chemically modified starch, which exhibits the required degree of gelling without heating or with a lower degree of heating. The degree of gelling is related to the viscosity of the starch. The gelatinisation of the starch increases on the food product during the cooking steps in its preparation and during reheating. Modified starches include starches producible by modified, e.g. transgenic, crops.

The coating of the invention also contains a fibrous component. Dietary fibre may be obtained from a variety of sources, vegetable sources being preferred. Advantageously, fibre is obtained from pea. Fibre is considered to be a healthy dietary supplement.

Fibre according to the invention may be in any size, preferably consisting of fibres between 100µm and 1mm in length. The fibre content of the coating directly affects both the viscosity and the water binding capacity of the coating, and is preferably kept between 0.1 and 12%, more preferably between 0.5 and 2.5%, by weight of the coating. As before, however, the fibre content may be adjusted in order to keep the viscosity of the coating such that 0.1 to 14%, preferably 2 to 6%, by weight is retained on the product after coating.

The coating of the invention may contain further ingredients, as required, preferably, the coating comprises agents which regulate the crispness thereof. For example, a raising agent, such as sodium bicarbonate, may be included. Raising agents expand the coating during the frying process and regulate the amount of fat which is incorporated therein. This is important in achieving a crisp, layered outer surface of a fried product.

Advantageously, flavours may be incorporated into the coating. Moreover, as discussed above, pyrophosphates may be employed, especially in the case of dried potato products, in order to prevent "greying" of the potato slices.

It is an advantage of the invention that reflective packaging does not have to be provided for microwave reheating. The packaging costs are disproportionate in comparison to the cost of the food product itself. However, if desired, a reflective packaging, or a reusable susceptor device, may be used to further improve the reheating properties of the food product in a microwave oven.

The invention is further described, for the purpose of illustration only, in the following examples.

### General Procedures

### Preparation of French fries before coating

### Raw material

Potato "Bintje", 18% - 22% solids

The potatoes are peeled by hand and cut into slices of 9x9 mm or 14x14 mm. The slices are then blanched at 72°C.

The result of the blanching is tested as follows:
- one chip is broken and the two fractures are pushed together
- the two halves are slowly pulled apart
- now threads of starch can be seen. When the threads are longer than 2 mm, the blanching can be stopped
- the product has to be peroxidase negative

Blanching is stopped after 12 minutes for 9x9 and after 16 minutes for 14x14 The French fries are dipped for 1 minute into a solution of 1 % acid sodium pyrophosphate of 80°C.

The French fries are now ready for being coated.

### Raw materials used in the coating mixture

Perfectamyl FFC or Perfectamyl FFC23
   - Di-starch-phosphate of potato
Perfectamyl B1102 or Perfectamyl B1109
   - Dextrin of potato starch
Swelite
   - Outer fibre of yellow pea
Nastar
   - Starch of yellow pea
Rice flour
Wheat flour
Sodium bicarbonate
   - Raising agent

### Standard procedure for mixing the coating

The composition of the coating depends on the percentage solids of the potato, the frying characteristics of the French fries and the cut size of the French fries.

During frying foam is formed because of moisture-evaporation. this can therefore be used to estimate the moisture content of the potato. Before mixing the coating the frying characteristics of the French fries are tested. French fries are fried and by looking to the amount of foam formed an estimate is made on the necessary thickness of the coating.

The coating is mixed as follows;
1. 1000ml of water is prepared with a pH of A by adding 0.1M HCl.
2. The water is heated to B°C.
3. Perfectamyl FFC is added while continuously stirring.

4. This mixture is kept on B°C for C minutes 5. Perfectamyl B1102 is added
6. The mixture is heated to D°C en kept on this temperature for E minutes
7. The viscosity of the mixture is checked visually
8. Swelite and Nastar are added and well mixed
9. The mixture is taken from the heating device and rice flour and starch flour are added
10. The mixture is cooled back to F°C
11. Sodium bicarbonate is added

Precise details are given in the Examples set forth below.

### Coating procedure

### Coating:

500 gram of French fries are immersed into 1000 ml of the coating mixture for 3 minutes. The French fries are then drained on a perforated plate. The amount of mixture stuck to the French fries (pick-up) can be determined by weighing the coated French fries and comparing this weight to the original weight of uncoated fries.

Subsequently, the coated French fries are dried, fried, cooled and frozen. Exact details are given in the following Examples. All of Examples 1 to 15 successfully produce crisp, palatable Frech fries when microwave reheating is used. Moreover, in Examples 8 to 15, this is achieved without the use of a susceptor.

### Example 1

Date: April/May 1997
Cutsize: 14x14 mm

### Recipe mixture (weight %)

- Perfectamyl FFC: :40
- Perfectamyl B1102: :18
- Swelite: :13
- Nastar: :8.3
- Rice flour: :10
- Wheat flour: :10
- Sodium bicarbonate: :0.7

The above ingredients are diluted to 10% (w/w) of their stated concentrations in the final coating mixture, which is prepared according to the standard procedure, using the following variables:
- pH A: : 6
- Temperature B (°C): : 45
- Time C (minutes): : 10
- Temperature D (°C): : 60
- Time E (minutes): : 3
- Temperature F (°C): : 20

Pick-up of mixture (weight%): about 6

After coating, the fries are processed as follows:
- Drying:: 15 minutes at 100°C with 100% ventilation
10 minutes at 60°C with 75% ventilation
- Frying:: 3 minutes 180-200°C
- Cooling:: 20 minutes 2°C
- Freezing:: 24 hours -20°C The fries are then reheated, from frozen, in a microwave oven for 3 minutes at 500 W, with susceptor.

### Example 2

Date: 12-05-1997
Cutsize: 9x9 mm

### Recipe mixture (weight%)

- Perfectamyl FFC: :55
- Perfectamyl B1102: :23
- Swelite: :18
- Nastar: :11.7
- Rice flour: :5
- Wheat flour: :5
- Sodium bicarbonate: :0.3

The above ingredients are diluted to 15% (w/w) of their stated concentrations in the final coating mixture, which is prepared according to the standard procedure, using the following variables:
- pH A: :6
- Temperature B (°C): :56
- Time C (minutes): :8
- Temperature D (°C): :67
- Time E (minutes): :7
- Temperature F (°C): :20

Pick-up of mixture (weight%): 6

After coating, the fries are processed as follows:
- Drying:: 15 minutes at 100°C with 100% ventilation
10 minutes at 60°C with 75% ventilation
- Frying:: 4 minutes 180-200°C
- Cooling:: 20 minutes 2°C
- Freezing:: 24 hours -20°C

The fries are then reheated, from frozen, in a microwave oven for 3 minutes at 500 W, with susceptor.

### Example 3

Date: 16-05-1997
Cutsize: 9x9 mm

### Recipe mixture (weight%)

- Perfectamyl FFC: :39
- Perfectamyl B1102: :42
- Swelite: :8
- Nastar: :0.4
- Rice flour: :3
- Wheat flour: :7
- Sodium bicarbonate: :0.6

The above ingredients are diluted to 12% (w/w) of their stated concentrations in the final coating mixture, which is prepared according to the standard procedure, using the following variables:
- pH A: :6
- Temperature B (°C): :45
- Time C (minutes): :10
- Temperature D (°C): :60
- Time E (minutes): :7
- Temperature F (°C): :10

Pick-up of mixture (Weight %) :1.3

After coating, the fries are processed as follows:
- Drying:: 20 minutes at 100°C with 100% ventilation
12 minutes at 60°C with 75% ventilation
- Frying:: 3.30 minutes 180-200°C
- Cooling:: 20 minutes 2°C
- Freezing:: 24 hours -20°C

The fries are then reheated, from frozen, in a microwave oven for 3 minutes at 500 W, with susceptor.

### Example 4

Date: 11-06-1997
Cutsize: 14x14 mm

### Recipe mixture (weight%)

- Perfectamyl FFC23: : 17
- Perfectamyl B1109: : 44
- Swelite: : 13
- Nastar: : 10
- Rice flour: : 13
- Wheat flour: : 1.7
- Sodium bicarbonate: : 1.3

The above ingredients are diluted to 6% (w/w) of their stated concentrations in the final coating mixture, which is prepared according to the standard procedure, using the following variables:
- pH A: : 5.3
- Temperature B (°C): : 50
- Time C (minutes): : 20
- Temperature D (°C): : 63
- Time E (minutes): : 7
- Temperature F (°C): : 20

Pick-up of mixture (weight %): 3

After coating, the fries are processed as follows:
- Drying:: 20 minutes at 100°C with 100% ventilation
12 minutes at 60°C with 75% ventilation
- Frying:: 4 minutes 180-200°C
- Cooling:: 20 minutes 2°C
- Freezing:: 24 hours -20°C

The fries are then reheated, from frozen, in a microwave oven for 2 minutes at 750 W, with susceptor.

### Example 5

Date: 11-06-1997
Cutsize: 9x9 mm

### Recipe mixture (weight%)

- Perfectamyl FFC23: :51
- Perfectamyl B1109: :4
- Swelite: :24
- Nastar: :5
- Rice flour: :6
- Wheat flour: :7.3
- Sodium bicarbonate: :0.7

The above ingredients are diluted to 6% (w/w) of their stated concentrations in the final coating mixture, which is prepared according to the standard procedure, using the following variables:
- pH A: :6
- Temperature B (°C): :50
- Time C (minutes): :30
- Temperature D (°C: ) :73
- Time E(minutes): :4
- Temperature F (°C): :20

Pick-up of mixture (weight%): 2

After coating, the fries are processed as follows:
- Drying:: 30 minutes at 80°C with 100% ventilation
20 minutes at 60°C with 75% ventilation
- Frying:: 3 minutes 180-200°C
- Cooling:: 20 minutes 2°C
- Freezing: : 24 hours -20°C

The fries are then reheated, from frozen, in a microwave oven for 2 minutes at 750 W, with susceptor.

### Example 6

Date: 14-08-1997
Cutsize: 14x14 mm

### Recipe mixture (weight%)

- Perfectamyl. FFC: :60
- Perfectamyl B1109: :10
- Swelite: :8
- Nastar: :2
- Rice flour: :10
- Wheat flour: :9
- Sodium bicarbonate: :1

The above ingredients are diluted to 10% (w/w) of their stated concentrations in the final coating mixture, which is prepared according to the standard procedure, using the following variables:
- pH A: .6
- Temperature B (°C): :45
- Time C (minutes): :15
- Temperature D (°C): :70
- Time E (minutes): :2
- Temperature F (°C): :10

Pick-up of mixture (weight%): 6

After coating, the fries are processed as follows:
- Drying:: 20 minutes at 100°C with 100% ventilation
20 minutes at 85°C with 100% ventilation
- Frying:: 4 minutes 180-200°C
- Cooling:: 20 minutes 2°C
- Freezing:: 24 hours -20°C

The fries are then reheated, from frozen, in a microwave oven for 2 minutes at 750 W, with susceptor.

### Example 7

Date: 22-08-1997
Cutsize: 14x14 mm

### Recipe mixture (weight%)

- Perfectamyl FFC23: :19
- Perfectamyl B1102: :59
- Swelite: :4
- Nastar: : 6
- Rice flour: :5
- Wheat flour: :6-3
- Sodium bicarbonate: :0.7

The above ingredients are diluted to 20% (w/w) of their stated concentrations in the final coating mixture, which is prepared according to the standard procedure, using the following variables:
- pH A: :6
- Temperature B (°C): :50
- Time C (minutes): :15
- Temperature D (°C): :65
- Time F (minutes): :10
- Temperature F (°C): :20

Pick-up of mixture (weight%): 9

After coating, the fries are processed as follows:
- Drying:: 10 minutes at 115°C with 100% ventilation
10 minutes at 70°C with 75% ventilation
- Frying:: 1 minutes 180-200°C
- Cooling:: 20 minutes 2°C
- Freezing:: 4 hours -20°C

The fries are then reheated, from frozen, in a microwave oven for 2 minutes at 500 W, with susceptor.

### Example 8

Date: 22-09-1997
Cutsize: 14x14 mm

### Recipe mixture (weight%)

- Perfectamyl. FFC23: :70
- Perfectamyl B1102: :10
- Swelite: :6
- Nastar: :3
- Rice flour: :10
- Wheat flour: :0
- Sodium bicarbonate: :1

The above ingredients are diluted to 30% (w/w) of their stated concentrations in the final coating mixture, which is prepared according to the standard procedure, using the following variables:
- pH A: :6
- Temperature B (°C): :45
- Time C (minutes): :15
- Temperature D (°C): :65
- Time E (minutes): :2
- Temperature F (°C): :10

Pick-up of mixture (weight%): 12

After coating, the fries are processed as follows:
- Drying:: none
- Frying:: 5 minutes 180-200°C
- Cooling:: 20 minutes 2°C
- Freezing:: 24 hours -20°C

The fries are then reheated, from frozen, in a microwave oven for 3 minutes at 750 W.

### Example 9

Date 26-09-1997
Cutsize: 14x14 mm

### Recipe mixture (weight%)

- Perfectamyl FFC: :55
- Perfectamyl B1109: :25
- Swelite: :7
- Nastar: :2
- Rice flour: :10
- Wheat flour: :0
- Sodium bicarbonate: :1

The above ingredients are diluted to 25% (w/w) of their stated concentrations in the final coating mixture, which is prepared according to the standard procedure, using the following variables:
- pH A: :5
- Temperature B (°C): :60
- Time C (minutes): :5
- Temperature D (°C): :65
- Time E (minutes): :4
- Temperature F (°C): :20

Pick-up of mixture (weight%): 9

After coating, the fries are processed as follows:
- Drying:: none
- Frying:: 5 minutes 180-200°C
- Cooling:: 20 minutes 20°C
- Freezing:: 6 hours -20°C

The fries are then reheated, from frozen, in a microwave oven for 3 minutes at 750 W.

### Example 10

Date: 03-10-1997
Cutsize: 14x14 mm

### Recipe mixture (weight%)

- Perfectamyl FFC: :50
- Perfectamyl B1102: :27.5
- Swelite: :5
- Nastar: :5
- Rice flour: :10
- Wheat flour: :1.5
- Sodium bicarbonate: :1

The above ingredients are diluted to 45% (w/w) of their stated concentrations in the final coating mixture, which is prepared according to the standard procedure, using the following variables:
- pH A: :6
- Temperature B (°C): :55
- Time C (minutes): :10
- Temperature D (°C): :65
- Time E (minutes): :6
- Temperature F (°C): :1.0

Pick-up of mixture (weight%): 5

After coating, the fries are processed as follows:
- Drying:: none
- Frying:: 5.30 minutes 180-200°C
- Cooling:: 20 minutes 2°C
- Freezing:: 24 hours -20°C

The fries are then reheated, from frozen, in a microwave oven for 2 minutes at 500 W.

### Example 11

Date: 16-10-1997
Cutsize: 9x9 mm

### Recipe mixture (weight%)

- Perfectamyl PFC23: :55
- Perfectamyl B1102: :21
- Swelite: :5
- Nastar: :6
- Rice flour: :10
- Wheat flour: :2
- Sodium bicarbonate: :1

The above ingredients are diluted to 9% (w/w) of their stated concentrations in the final coating mixture, which is prepared according to the standard procedure, using the following variables:
- pH A: :5.5
- Temperature B (°C): :50
- Time C (minutes): :15
- Temperature D (°C): :55
- Time E (minutes): :10
- Temperature *F* (°C): :20

Pick-up of mixture (weight %): 2

After coating, the fries are processed as follows:
- Drying:: none
- Frying:: 4 minutes 180-200°C
- Cooling:: 20 minutes 2°C
- Freezing:: 24 hours -20°C

The fries are then reheated, from frozen, in a microwave oven for 2 minutes at 500 W.

### Example 12

Date: 20-10-1997
Cutsize: 14x14 mm

### Recipe mixture (weight%)

- Perfectamyl PFC23: :66
- Perfectamyl. B1102: :13
- Swelite: :3
- Nastar: :5
- Rice flour: :11
- Wheat flour: :1.6
- Sodium bicarbonate: :0.4

The above ingredients are diluted to 6% (w/w) of their stated concentrations in the final coating mixture, which is prepared according to the standard procedure, using the following variables:
- pH A: :5
- Temperature B (°C): :45
- Time C (minutes): :5
- Temperature D (°C): :60
- Time E (minutes): :20
- Temperature F (C): :10

Pick-up of mixture (weight%): 5

After coating, the fries are processed as follows:
- Drying:: 20 minutes at 100°C with 100% ventilation
20 minutes at 80°C with 80% ventilation
- Frying:: 3 minutes 180-200°C
- Cooling:: 20 minutes 2°C
- Freezing:: 2 hours -20°C

The fries are then reheated, from frozen, in a microwave oven for 2 minutes at 500 W.

### Example 13

Date: 20-10-1997
Cutsize: 9x9 mm

### Recipe mixture (weight%)

- Perfectamyl FPC: :43.3
- Perfectamyl B1102: :10
- Swelite: :15
- Nastar: :10
- Rice flour: :11
- Wheat flour: :10
- Sodium bicarbonate: :0.7

The above ingredients are diluted to 12% (w/w) of their stated concentrations in the final coating mixture, which is prepared according to the standard procedure, using the following variables:
- pH A: :5
- Temperature B (°C): :45
- Time C (minutes): :5
- Temperature D (°C): :60
- Time E (minutes): :20
- Temperature F (°C): :10

Pick-up of mixture (weight%): 0.5

After coating, the fries are processed as follows:
- Drying:: 20 minutes at 100°C with 100% ventilation
10 minutes at 80°C with 80% ventilation
- Frying:: 3.30 minutes 180-200°C
- Cooling:: 20 minutes 2°C
- Freezing:: 2 Hours -20°C

The fries are then reheated, from frozen, in a microwave oven for 2 minutes at 500 W.

### Example 14

Date: 23-10-1997
Cutsize: 14x14 mm

### Recipe mixture (weight%)

- Perfectamyl FFC: :50
- Perfectamyl B1102: :19.5
- Swelite: :10
- Nastar: :0.5
- Rice flour: :10
- Wheat flour: :9
- Sodium bicarbonate: :1

The above ingredients are diluted to 10% (w/w) of their stated concentrations in the final coating mixture, which is prepared according to the standard procedure, using the following variables:
- pH A: :6
- Temperature B (°C): :55
- Time C (minutes): :10
- Temperature D (°C): :60
- Time E (minutes): :10
- Temperature F (°C): :20

Pick-up of mixture (weight%): 10

After coating, the fries are processed as follows:
- Drying:: 30 minutes at 100°C with 100% ventilation
10 minutes at 75°C with 90% ventilation
- Frying:: 4 minutes 180-200°C
- Cooling:: 20 minutes 2°C
- Freezing:: 5 hours -20°C

The fries are then reheated, from frozen, in a microwave oven for 3 minutes at 750 W.

### Example 15

Date: 23-10-1997
Cutsize: 9x9 mm

### Recipe mixture (weight%)

- Perfectamyl FFC: :50
- Perfectamyl B1102: :15
- Swelite: :19
- Nastar: :2.3
- Rice flour: :8
- Wheat flour: :5
- Sodium bicarbonate: :0.7

The above ingredients are diluted to 16% (w/w) of their stated concentrations in the final coating mixture, which is prepared according to the standard procedure, using the following variables:
- pH A: :6
- Temperature B (°C): :55
- Time C (minutes): :10
- Temperature D (°C): :72
- Time E (minutes): :5
- Temperature F (°C): :10

Pick-up of mixture (weight%): 2

- Drying:: 20 minutes at 100°C with 100% ventilation
30 minutes at 80°C with 75% ventilation
- Frying:: 3 minutes 180-200°C
- Cooling:: 20 minutes 2°C
- Freezing:: 5 hours -20°C

The fries are then reheated, from frozen, in a microwave oven for 2 minutes at 750 W.

## Claims

1. A method for producing a reheatable food product, comprising the steps of:
a) preparing a coating for the food product;
b) adjusting the water binding capacity of the coating such that moisture developed during reheating of the food product is absorbed without compromising the crispness of the exterior of the product; and
c) applying the coating to the product.

2. A method according to claim 1, wherein the food product is a fried food product.

3. A method according to claim 2, wherein the food product is a French fried potato.

4. A method according to claim 2 or claim 3, wherein the potato product is blanched prior to coating.

5. A method according to claim 4, wherein the potato product is dried in between the blanching and coating steps.

6. A method according to any preceding claim, wherein the product is treated with a pyrophosphate prior to the coating step.

7. A coating composition suitable for application to a reheatable food product comprising:
a) gelatinised starch obtainable from at least two sources; and
b) fibre;
wherein the viscosity of the coating is such that the reheatable food product retains between 0.1 and 14% by weight of the coating after application.

8. A coating according to claim 7, wherein the starch is obtainable from potato and pea sources.

9. A coating according to claim 7 or claim 8, wherein the fibre is pea fibre.

10. A coating according to any one of claims 7 to 9, wherein the fibre is present in an amount between 0.1% and 12% by weight of the total weight of the coating.

11. A coating according to any one of claims 7 to 10, further comprising rice flour and/or wheat flour.

12. A coating composition according to any one of claims 7 to 11, further comprising a raising agent.

13. A reheatable food product coated with a coating according to any one of claims 7 to 12.

14. A reheatable food product according to claim 13 which is a French fried potato.
